# EUROPEAN PATENT SPECIFICATION

(11) **EP 2 902 983 B1**
(45) Date of publication and mention of the grant of the patent: **03.04.2019**
(21) Application number: 15153249.6
(22) Date of filing: 30.01.2015
(51) Int. Cl.: G08B 25/00, G08B 25/01, G08B 25/10, G08B 17/10, G08B 26/00, H04W 28/18

(54) **Wireless system**
Drahtloses System
Système sans fil

(30) Priority: 30.01.2014 JP 2014016002
(43) Date of publication of application: 05.08.2015
(73) Proprietor: Panasonic Intellectual Property Management Co., Ltd., Osaka-shi, Osaka 540-6207 (JP)
(72) Inventor: Ando, Shinichiro, Chuo-ku, Osaka 540-6207 (JP); Hoshiba, Keitaro, Chuo-ku, Osaka 540-6207 (JP); Kurita, Masanori, Chuo-ku, Osaka 540-6207 (JP); Okumura, Kouichi, Chuo-ku, Osaka 540-6207 (JP)
(74) Representative: Appelt, Christian W.

(56) References cited:
- EP-A1- 2 498 233
- US-A1- 2011 312 354

## Description

### Technical Field

The present invention relates to wireless systems, and especially relates to a wireless system including multiple wireless sensors and a wireless relay for transferring sensing information of any of the multiple wireless sensors to a receiver.

### Background Art

In the past, there has been used a wireless system in which sensing information of a wireless sensor is transferred to a receiver by way of a wireless relay.

As such a wireless system, an automatic fire alarm system **101** shown in **FIG. 7** has been known (see document 1 [JP2013-8194 A]). This automatic fire alarm system **101** includes wireless type sensors **106** which are wireless sensors, and a wireless signal receiving relay **105** which is a wireless relay for receiving wireless signals.

In the automatic fire alarm system **101,** when sensing a fire, the wireless type sensor **106** sends a wireless signal indicative of occurrence of the fire to the wireless signal receiving relay **105.** The wireless signal receiving relay **105** receives the wireless signal and notifies the receiver **103** of occurrence of the fire by way of a transmission path **104.** When receiving the signal from the wireless signal receiving relay **105,** the receiver **103** starts an alarming process. Note that, the automatic fire alarm system **101** includes an electric wave relay **107** configured to relay a wireless signal received from one or more wireless type sensors **106** to the wireless signal receiving relay **105** by wireless communication. Further, in the automatic fire alarm system **101,** the wireless signal receiving relay **105** and the wireless type sensors **106** are installed in each floor of a building **102,** and the receiver **103** is installed in the ground floor.

In the wireless system, the wireless relay needs to receive wireless signals from the wireless sensors at sufficient reception intensities.

However, in the wireless system, when the wireless sensor and the wireless relay are away from each other, the reception intensity of the wireless signal at the wireless sensor is likely to be insufficient. Similarly, in the wireless system, when an object blocking electric waves is present between the wireless sensor and the wireless relay, the reception intensity of the wireless signal at the wireless sensor is also likely to be insufficient. Especially, in a room, the reception intensities of the wireless signals may vary depending on installation situation of furniture. In the wireless system, in some case, it may be necessary to situate each wireless sensor at sites showing appropriate reception intensities in view of electric wave conditions.

In the wireless system, it is troublesome to check whether each of the wireless sensors can receive wireless signals at sufficient reception intensities.

US 2011/0312354 (A1) describes a first usage-rate measuring unit that measures the usage rate of an operating frequency channel, and a second usage-rate measuring unit that measures the usage rates of unused frequency channels. When the usage rate measured by the first usage-rate measuring unit exceeds a predetermined value to generate a busy state, a first usage-rate determining unit displays the unused frequency channel having the low frequency rate, which is determined by the second usage-rate determining unit, to recommend the unused frequency channel as a switching destination.

### Summary of Invention

In view of the above insufficiency, the present invention has aimed to propose a wireless system which allows a user to check reception intensities of wireless signals of individual multiple wireless sensors collectively.

The wireless system in accordance with the present invention includes: multiple wireless sensors; a wireless relay configured to perform wireless communication with the multiple wireless sensors to send sensing information of one or more of the multiple wireless sensors to a receiver; and a display device. The wireless relay is configured to send a first wireless signal as a check signal. Each of the multiple wireless sensors is configured to, when receiving the check signal, send a response signal including information indicative of a reception intensity of the received check signal and individual identification information thereof. The wireless relay is configured to, when receiving the response signals from the multiple wireless sensors, send, as the check signal, a second wireless signal including information indicative of reception intensities of the response signals of the multiple wireless sensors and pieces of the individual identification information of the multiple wireless sensors. The display device has at least one of: a first function of receiving the response signals from the multiple wireless sensors and displaying the reception intensities of the received check signals of the multiple wireless sensors; and a second function of receiving the second wireless signal from the wireless relay and displaying the reception intensities of the response signals of the multiple wireless sensors.

### Brief Description of the Drawings

**FIG. 1** is a schematic diagram illustrating the wireless system of the present embodiment.
**FIG. 2** is a block diagram illustrating the wireless sensor of the wireless system of the present embodiment.
**FIG. 3** is a block diagram illustrating the wireless relay of the wireless system of the present embodiment.
**FIG. 4** is a block diagram illustrating the receiver of the wireless system of the present embodiment.
**FIG. 5** is a block diagram illustrating the display device of the wireless system of the present embodiment.
**FIG. 6** is an explanatory diagram illustrating operations of the wireless system of the present embodiment.

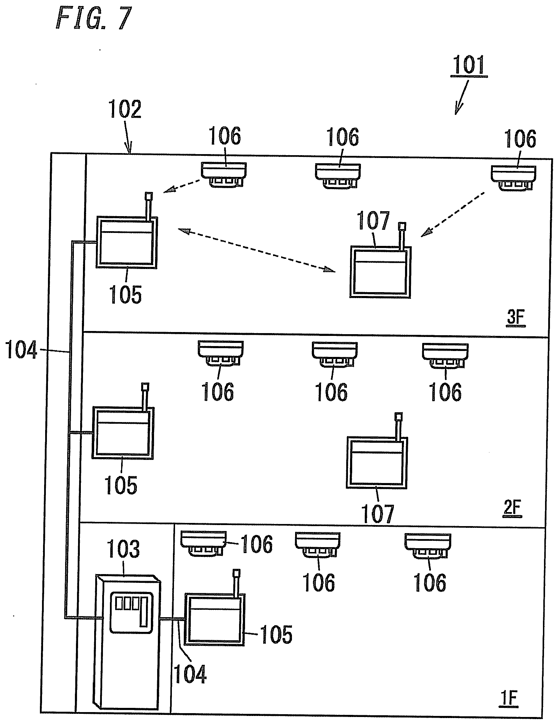

**FIG. 7** is a block diagram illustrating a fire alarm system of background art.

### Description of Embodiments

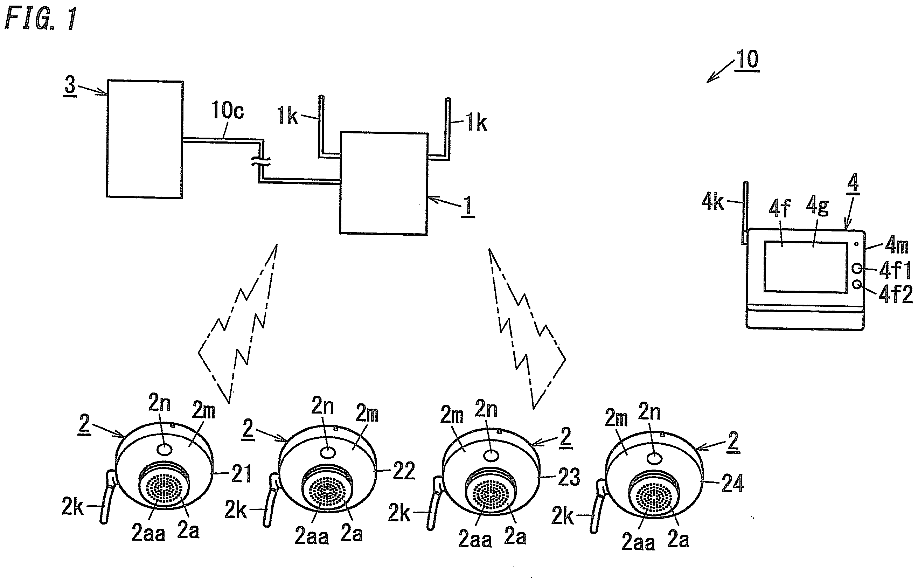

The wireless system 10 of the present embodiment is described with reference to **FIG. 1** to **FIG. 6****.**

As shown in **FIG. 1****,** the wireless system **10** of the present embodiment includes multiple (in this embodiment, four) wireless sensors **2.** The wireless system **10** includes a wireless relay **1** configured to perform wireless communication with the multiple wireless sensors **2** to send sensing information of one or more of the multiple wireless sensors **2** to a receiver **3.** The wireless system **10** includes a display device **4** configured to receive wireless signals on the wireless communication between the wireless relay **1** and the multiple wireless sensors **2** and display reception intensities of the received wireless signals relating to one or more of the multiple wireless sensors **2.**

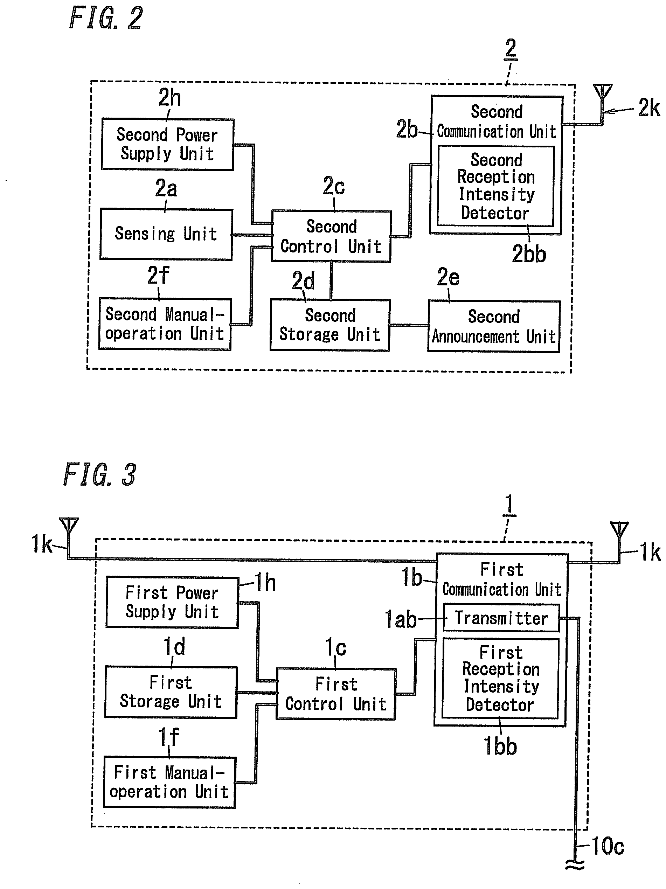

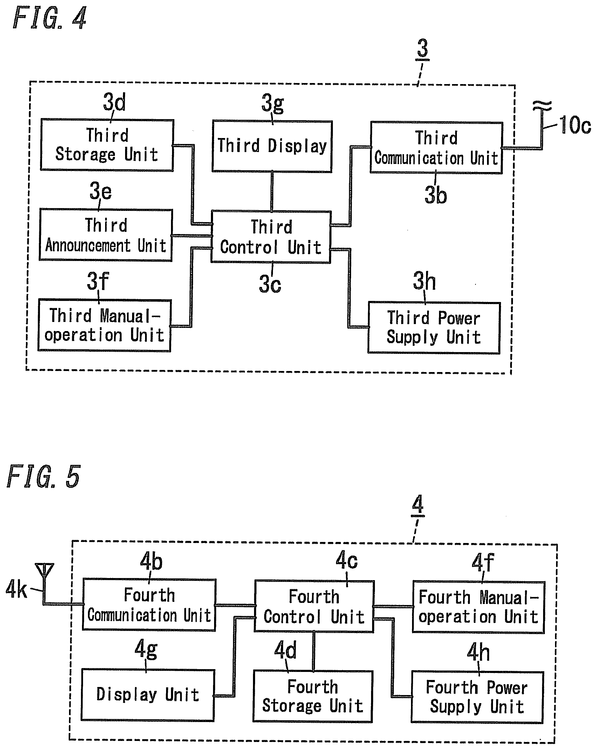

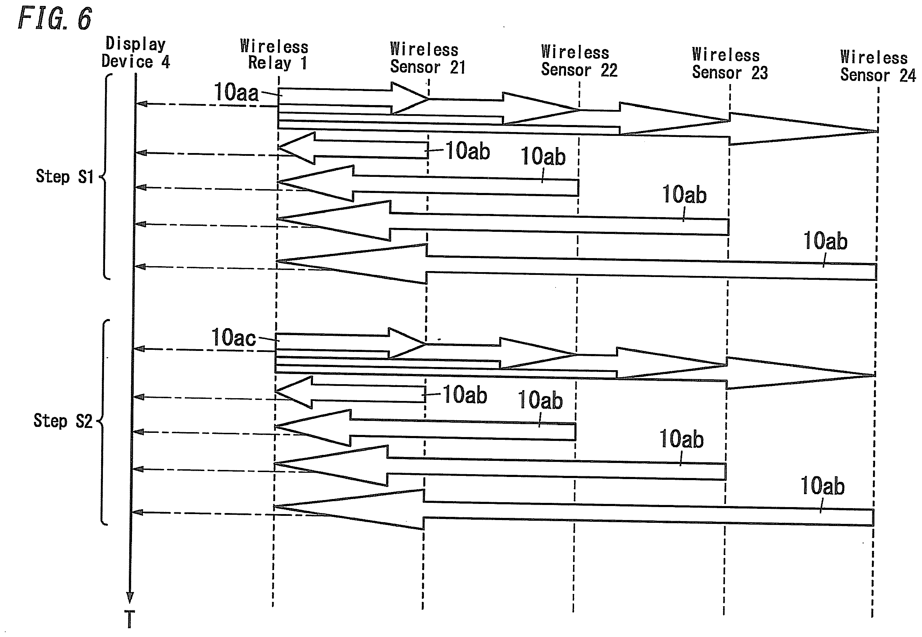

The wireless relay **1** includes a first communication unit **1b** configured to send a first wireless signal **10aa** to preliminarily registered wireless sensors **2** simultaneously (see **FIG. 3** and **FIG. 6**). Each wireless sensor 2 includes a second communication unit **2b** configured to send a response signal **10ab** including information indicative of a reception intensity of the received first wireless signal **10aa** and individual identification information of the corresponding wireless sensor, to the wireless relay **1** (see **FIG. 2** and **FIG. 6**). The wireless relay **1** is configured to, when receiving the response signals **10ab,** send a second wireless signal **10ac** including information indicative of reception intensities of the response signals **10ab** from the individual wireless sensors **2** and individual identification information of the individual wireless sensors **2.** In the wireless relay **1,** the first communication unit **1b** is configured to send the second wireless signal **10ac** to the preliminarily registered wireless sensors **2** simultaneously. The wireless relay **1** and each wireless sensor **2** are configured to repeat sending the second wireless signal **10ac** and the response signals **10ab,** respectively. The display device **4** is configured to receive the response signal **10ab** and the second wireless signal **10ac** and display the reception intensities of the individual wireless sensors **2** on a display unit **4g** (see **FIG. 5**).

In the wireless system **10** of the present embodiment, the display device **4** receives the response signal **10ab** and the second wireless signal **10ac,** and displays reception intensities of the wireless sensors **2.** Therefore, a user can confirm the reception intensities of the wireless sensors **2** collectively. According to the wireless system **10,** the information of the reception intensities and the individual identification information of the wireless sensor **2** are displayed on the display device **4,** and due to this fact a user can know the individual reception intensities of all of the wireless sensors **2** collectively without going to a site for checking the communication states. The wireless system **10** of the present embodiment allows a user to know the individual reception intensities of all of the wireless sensors **2** anytime. Therefore, it is possible to move the wireless sensor **2** from a current location to a new location in which the reception intensities are higher than those of the current location.

Hereinafter, the wireless system **10** of the present embodiment is described in detail. The wireless system **10** of the present embodiment is explained with reference to an example in which the wireless sensors **2** are fire alarms for sensing smoke and then announcing occurrence of a fire. The first explanation is made to the wireless sensor **2.** Note that, with regard to components of the wireless relay **1,** the wireless sensor **2,** the receiver **3,** and the display device **4** which have the same name, the prefix "first" is attached to the component of the wireless relay **1,** the prefix "second" is attached to the component of the wireless sensor **2,** the prefix "third" is attached to the component of the receiver **3,** and the prefix "fourth" is attached to the component of the display device **4.**

As shown in **FIG. 2****,** the wireless sensor **2** includes a sensing unit **2a** configured to sense smoke, a second communication unit **2b** configured to send a wireless signal including sensing information of occurrence of a fire, and a second control unit **2c** electrically connected to the sensing unit **2a** and the second communication unit **2b** and configured to perform various types of controls. Further, it is preferable that the wireless sensor **2** include a second storage unit **2d,** a second announcement unit 2e for providing alarm, and a second manual-operation unit **2f** for manual-operation of various types of settings. It is preferable that the wireless sensor **2** include a second power supply unit **2h** constituted by a battery. The second power supply unit **2h** is not limited to using a battery as a power source for driving the wireless sensor **2** but may use a commercial AC power source. The wireless sensor **2** may be installed on a ceiling of a room, for example.

As shown in **FIG. 1****,** the wireless sensor **2** includes the sensing unit **2a** which is cylindrical and protrudes from a center of a housing **2m** with a disk shape. It is preferable that the wireless sensor **2** include a light emitter **2n** which is provided to the housing **2m** and is configured to indicate that the wireless sensor **2** is in operation. In the wireless sensor **2,** through holes **2aa** for allowing passage of sounds from a speaker constituting the second announcement unit **2e** are provided to a surface of the sensing unit **2a.** The wireless sensor **2** includes a second antenna **2k** which is connected to the second communication unit **2b** and is situated on a side face of the housing **2m.** In the wireless sensor **2,** the housing **2m** accommodates a circuit board on which the second communication unit **2b** and the second control unit **2c** are mounted, the second announcement unit **2e,** and the second power supply unit **2h.**

The sensing unit **2a** is configured to sense smoke, for example. The wireless sensor **2** can sense a fire due to the fact that the sensing unit **2a** senses smoke. For example, the sensing unit **2a** may include a light emitting element, a light receiving element, and a sensing room for accommodating them. For example, the sensing room includes a sensing space which shuts out external light and has a labyrinth wall allowing passage of external air. The light emitting element may be a light emitting diode or a laser diode for emitting infrared rays, for example. The light receiving element may be a photodiode or phototransistor for receiving infrared rays, or a pyroelectric element, for example. In the sensing unit **2a,** for example, the light emitting element and the light receiving element are situated so that optical axes thereof crosses each other in order to prevent light from the light emitting element from directly entering the light receiving element. Note that, it is preferable that the sensing unit **2a** include an insect screening filter for prevention of intrusion of insects into the sensing room.

In the sensing unit **2a,** when smoke exists in the sensing room, the infrared rays from the light emitting element are scattered by the smoke. In the sensing unit **2a,** the infrared rays scattered by the smoke enter the light receiving element. In the sensing unit **2a,** the infrared rays emitted from the light emitting element are scattered by the smoke, and the scattered infrared rays are received by the light receiving element and thereby photoelectric conversion is performed. In the sensing unit **2a,** output obtained by the photoelectric conversion by the light receiving element is inputted into the second control unit **2c.** When the output of the light receiving element into the second control unit **2c** exceeds a predetermined threshold, the wireless sensor **2** determines that a fire has occurred. The sensing unit **2a** is not limited to sensing smoke, but may be configured to, when sensing a fire by judging at least one of heat and smoke, output a signal of sensing information indicating that the fire has beeb sensed, to the second control unit **2c.** For example, the sensing unit **2a** may be configured to try to sense smoke at an interval of about **5** seconds. Note that, the wireless sensor **2** of the wireless system **10** is not limited to a fire alarm, but may be a gas leakage alarm, or a crime prevention alarm. In the wireless sensor **2,** the sensing unit **2a** may be a gas detection sensor, or a vibration detecting sensor for sensing a vibration caused by breakage of glass windows.

The second communication unit **2b** is configured to send and receive wireless signals to and from the wireless relay **1.** The second communication unit **2b** may include an appropriate transceiver. To send and receive wireless signals, it is preferable that the second communication unit **2b** be connected to a second antenna **2k.** The second communication unit **2b** is not limited to sending and receiving wireless signals to and from the wireless relay 1, but may be configured to send and receive wireless signals to and from another wireless sensor **2.** When the wireless sensor **2** is configured to send and receive wireless signals to and from another wireless sensor **2,** the wireless sensor **2** can output alarm based on the sensing information of a fire sensed by another wireless sensor **2.** The second communication unit **2b** may include a second reception intensity detector **2bb** configured to measure a reception intensity of a received wireless signal. The second reception intensity detector **2bb** may be configured to compare an intensity of the wireless signal received by the second antenna **2k** with a value of the reception intensity sufficient for receiving wireless signals which is preliminarily stored.

When the received wireless signal has a reception intensity lower than the value of the reception intensity stored preliminarily, the second reception intensity detector **2bb** determines that the reception intensity of the received wireless signal has an insufficient level for receiving wireless signals. In contrast, when the received wireless signal has a reception intensity equal to or more than the value of the reception intensity stored preliminarily, the second reception intensity detector **2bb** determines that the reception intensity of the received wireless signal has a sufficient level for receiving wireless signals. Note that, with regard to wireless communication between the wireless relay **1** and the wireless sensor **2,** the insufficient level for receiving wireless signals means such a level that detection of wireless signals are incapable, or a signal level which may cause false detection.

When determining that a fire has occurred by judging the output from the sensing unit **2a,** the second control unit **2c** controls the second communication unit **2b** to send the sensing information indicative of fire occurrence as a wireless signal to the wireless relay **1.** The second control unit **2c** may be implemented by use of a microcomputer, for example. The second control unit **2c** may be configured to control operations of the second communication unit **2b** and the second announcement unit **2e** according to programs preliminarily stored.

The second control unit **2c** is configured to, when receiving a check signal through the second communication unit **2b,** send a response signal through the second communication unit **2b.** The response signal includes information indicative of a reception intensity of the check signal, and individual identification information of the wireless sensor **2.** The check signal is, for example, a signal including a check message. In other words, when a received signal includes the check message, the second control unit **2c** sends the response signal.

The second storage unit **2d** is configured to store the corresponding individual identification information (i.e., the individual identification information allocated to the wireless sensor **2** including this second storage unit **2d**), for identification of the multiple wireless sensors **2.** Further, the second storage unit **2d** stores the information indicative of the reception intensity of the wireless signal detected by the second reception intensity detector **2bb.** The second storage unit **2d** may store programs for operating the second control unit **2c.** The second storage unit **2d** may be a non-volatile semiconductor memory such as an EEPROM (Electrically Erasable Programmable Read-Only Memory), for example.

The second power supply unit **2h** serves as a power source for driving the wireless sensor **2.** The second power supply unit **2h** may be a primary battery or a secondary battery. The second power supply unit **2h** may be a lithium battery, for example. The second power supply unit **2h** may be configured to detect a decrease in a battery voltage automatically, and, when the battery voltage becomes lower than a predetermined value, send a signal indicative of a decrease in the battery voltage from the wireless sensor **2** to the wireless relay **1.**

The second announcement unit **2e** is configured to output alarm in response to a signal from the second control unit **2c,** for example. The second announcement unit **2e** may output alarm by providing alarm sounds or voices for giving warning. For example, the second announcement unit **2e** may include a speaker or a buzzer.

The second manual-operation unit **2f** enables various types of settings of the wireless sensor **2.** For example, the second manual-operation unit **2f** may be provided to an opposite surface of the housing **2m** from the surface where the sensing unit **2a** is protruded. In response to manual-operation input to the second manual-operation unit **2f,** the wireless sensor **2** selects a frequency channel used for wireless communication with the wireless relay **1,** for example. For example, the second manual-operation unit **2f** may include a dip switch for selecting and setting the frequency channel. Further, in response to manual-operation input to the second manual-operation unit **2f,** the wireless sensor **2** selects an ID (identification) as unique individual identification information for the wireless sensor **2,** for example. For example, the second manual-operation unit **2f** may include a dip switch for setting the individual identification information. In the second manual-operation unit **2f,** the dip switch for selecting the frequency channel and the dip switch for setting the unique ID may be provided as separate parts. The dip switch for selecting the frequency channel may be configured to switch the frequency channels so as to enable wireless connection with up to four wireless relays **1.** The frequency may be appropriately selected from a range of 868. 5 MHz to 868. 7 MHz, for example. The dip switch for setting the unique ID may be configured to select one from candidates of the unique ID for sixteen wireless sensors **2** so as to enable operating up to sixteen the wireless sensors **2.** The wireless system **10** of the present embodiment is not limited to including the wireless sensors **2** serving as four fire alarms and the single wireless relay **1** for performing wireless communication with the wireless sensors **2.** The wireless system **10** of the present embodiment may be configured such that multiple wireless relays **1** each performs wireless communication with different multiple wireless sensors **2.**

The wireless sensor **2** includes an ID of the wireless sensor **2** in the wireless signal sent from the second communication unit **2b.** Since the wireless system **10** includes the ID of the wireless sensor **2** in the wireless signal, the wireless relay **1** as a destination can recognize which one of the multiple wireless sensors **2** the wireless signal is sent from.

Further, the wireless sensor **2** may be configured to designate a specific wireless relay **1** as a destination of the wireless signal by use of the ID. The wireless relay **1** may be configured to, when the ID of the destination of the received wireless signal is designated, not accept data of the wireless signal except a specific wireless relay **1** whose ID is preliminarily registered and matches the designated ID. The wireless sensor **2** is configured to, when receiving the wireless signal from the wireless relay **1,** send the ID stored in the second storage unit **2d** and the information indicative of the reception intensity of the received wireless signal to the wireless relay **1** through the second communication unit **2b.** Note that, the wireless sensor **2** may be configured to, when the reception intensity of the wireless signal from the wireless relay 1 is lower than a predetermined threshold, increase an output level of the wireless signal sent from the second communication unit **2b.**

As shown in **FIG. 3****,** the wireless relay **1** includes: the first communication unit **1b** configured to send and receive wireless signals to and from the second communication unit **2b** of the wireless sensor **2;** and a first control unit **1c** which is electrically connected to the first communication unit **1b** and performs various types of controls. It is preferable that the wireless relay **1** include a pair of first antennas **1k** connected to the first communication unit **1b**. It is preferable that the first communication unit **1b** include a transmitter **1ab** configured to send information of wireless signals received from the wireless sensor **2** to and receive information of wireless signals to be sent to the wireless sensor **2** from the receiver **3** through a transmission line **10c.** The transmission line **10c** may be a cable for 10BASE-T which is one of standards according to Ethernet (registered trademark), for example. The first communication unit **1b** may include a first reception intensity detector **1bb** configured to measure a reception intensity of a received wireless signal. Additionally, it is preferable that the wireless relay **1** include a first storage unit **1d** and a first manual-operation unit **1f** configured to perform various types of setting operations of the wireless relay **1.** It is preferable that the wireless relay **1** include a first power supply unit **1h** which is connected to an external commercial power source and is configured to supply appropriate power to the first control unit **1c,** for example. The first power supply unit **1h** is not limited to converting power from the external commercial power source into appropriate power as power for driving the wireless relay **1,** but may use a battery. Further, the wireless relay **1** may receive power from the receiver **3.** When the wireless relay **1** is configured to receive appropriate power from the receiver **3,** the wireless relay **1** need not necessarily include the first power supply unit **1h**. The wireless relay **1** may be installed on a wall of a room, for example.

The first communication unit **1b** is configured to send and receive wireless signals to and from the multiple wireless sensors **2.** The wireless relay **1** can receive the sensing information from the wireless sensor **2** through a wireless signal. Further, the wireless relay **1** can send various types of control information to the wireless sensor **2** through a wireless signal. In other words, the wireless relay **1** and the wireless sensor **2** are configured to perform bidirectional communication with each other. Further, the first communication unit **1b** can send and receive signals to and from the receiver **3.** In the wireless system **10** of the present embodiment, the wireless relay **1** is configured to convert sensing information of a wireless signal from the wireless sensor **2** into a signal for wired communication and send this signal to the receiver **3** connected to the wireless relay **1** by wire. The first reception intensity detector **1bb** may be configured to compare an intensity of the wireless signal received by the first antenna **1k** with a value of the reception intensity sufficient for receiving wireless signals which is preliminarily stored. When the received wireless signal has a reception intensity lower than the value of the reception intensity stored preliminarily, the first reception intensity detector **1bb** determines that the reception intensity of the received wireless signal has an insufficient level for receiving wireless signals. In contrast, when the received wireless signal has a reception intensity equal to or more than the value of the reception intensity stored preliminarily, the first reception intensity detector **1bb** determines that the reception intensity of the received wireless signal has a sufficient level for receiving wireless signals. The first communication unit **1b** includes a component for sending wireless signals, the transmitter **1ab** for sending the sensing information to the receiver **3** through the transmission line **10c,** and the first reception intensity detector **1bb** as a single part. The first communication unit **1b** is not limited to including the component for sending wireless signals, the transmitter **1ab,** and the first reception intensity detector **1bb** as a single part, but they may be provided as separate parts.

The first control unit **1c** is configured to control operations of the first communication unit **1b**. For example, when obtaining the sensing information of a fire from the wireless signal received by the first communication unit **1b,** the first control unit **1c** controls the transmitter **1ab** of the first communication unit **1b** to transmit the sensing information to the receiver **3.** The first control unit **1c** may be implemented by use of a microcomputer configured to drive according to appropriate programs, for example.

The first control unit **1c** is configured to send the first wireless signal **10aa** as the check signal through the first communication unit **1b**. The first wireless signal **10aa** is a signal including the check message, and thus one type of the check signals. In the present embodiment, the first control unit **1c** sends the first wireless signal **10aa** to the multiple wireless sensors **2** simultaneously through the first communication unit **1b**.

Further, the first control unit **1c** is configured to, when receiving the response signals **10ab** from the multiple wireless sensors **2** through the first communication unit **1b,** send the second wireless signal **10ac** as the check signal through the first communication unit **1b**. The second wireless signal **10ac** is a signal including the check message, and thus one type of the check signals. However, differently from the first wireless signal **10aa,** the second wireless signal **10ac** includes the information indicative of the reception intensities of the response signals **10ab** from the multiple wireless sensors **2** and pieces of the individual identification information of the multiple wireless sensors **2.** In the present embodiment, the first control unit **1c** sends the second wireless signal **10ac** to the multiple wireless sensors **2** simultaneously through the first communication unit **1b**.

The first storage unit **1d** is configured to store the individual identification information and the information indicative of the reception intensity of the wireless sensors **2** obtained from the wireless signals received by the first communication unit **1b** from the multiple wireless sensors **2.** The first storage unit **1d** may include an EEPROM, for example. The first storage unit **1d** may preliminarily store programs for driving the first control unit **1c.**

The first manual-operation unit **1f** is configured to select a frequency channel of the wireless relay **1** used for wireless communication with the wireless sensor **2.** The first manual-operation unit **1f** may include a dip switch, for example. The first manual-operation unit **1f** may include dip switches corresponding to four IDs. For example, the wireless relay **1** may be configured to receive only wireless signals from the wireless sensors **2** through a frequency channel corresponding to a dip switch which is on. With regard to wireless communication between the wireless sensors **2** and the wireless relays **1,** the first manual-operation unit **1f** uses a predetermined frequency channel of multiple frequency channels for each wireless sensor **2** or each wireless relay **1.** In the wireless system **10,** different frequency channels may be allocated to different combinations of the wireless relay **1** and the wireless sensor **2** which are desired to perform wireless communication, and therefore it is possible to avoid collision of wireless signals, false operations, and the like.

As shown in **FIG. 4****,** the receiver **3** includes: a third communication unit **3b** connected to the first communication unit **1b** of the wireless relay **1** through the transmission line **10c;** and a third control unit **3c** configured to control the third communication unit **3b.** It is preferable that the receiver **3** include a third announcement unit **3e** configured to provide alarm. For example, when the third communication unit **3b** receives the sensing information from the transmitter **1ab** of the wireless relay **1,** the third control unit **3c** provides alarm of fire occurrence from the third announcement unit **3e.** It is preferable that the receiver **3** include a third storage unit **3d** and a third display **3g** configured to display an alarm history. In the wireless system **10** of the present embodiment, the third control unit **3c** of the receiver **3** can identify, by judging the ID of the wireless sensor **2** included in the wireless signal, which one of the wireless sensor **2** sends the wireless signal and where the fire has been sensed. Further, the receiver **3** may be configured to receive a signal of state information such as a decrease in the battery voltage from the wireless sensor **2** through the wireless relay **1** to perform maintenance and management of a whole of the wireless system **10.**

The third control unit **3c** is configured to control the third communication unit **3b.** The third control unit **3c** may be configured to control the third announcement unit **3e** and/or the third display **3g** in addition to the third communication unit **3b.** The third control unit **3c** may control the third announcement unit **3e** to provide alarm therefrom. Further, for example, the third control unit **3c** can control the third announcement unit **3e** and the third display **3g** to provide audio alarm and/or visual alarm, and thereby notify a user of abnormality or malfunction of the wireless sensor **2.** Additionally, the third control unit **3c** may be configured to control an external fireproof door, a smoke prevention and control device, a sprinkler device, and/or the like. The third control unit **3c** may include a microcomputer, for example. The third control unit **3c** may be configured to control operations of the third communication unit **3b,** the third announcement unit **3e,** and the third display **3g** according to programs stored preliminarily.

The third storage unit **3d** is configured to store the alarm history. The third storage unit **3d** may store programs for driving the third control unit **3c.** The third storage unit **3d** may include an EEPROM or a hard disk drive, for example.

The third announcement unit **3e** is configured to provide alarm when controlled by the third control unit **3c.** The third announcement unit **3e** may be a buzzer, a speaker, or a light, for example. The third announcement unit **3e** can provide alarm by sounds from a buzzer or a speaker. The third announcement unit **3e** can provide alarm by lighting or blinking a light. The third announcement unit **3e** may be connected to a public network and configured to provide the sensing information of the wireless sensor **2** to a management center or a mobile phone of a user through the public network.

A third manual-operation unit **3f** is configured to allow various types of manual-operations on the receiver **3.** The third manual-operation unit **3f** may include various types of manual-operation switches. For example, the receiver **3** may be configured to, when alarm is provided due to the sensing information of the wireless relay **1,** stop providing the alarm in response to manual-operation on the third manual-operation unit **3f.**

For example, the third display **3g** can display the individual identification information of the wireless sensor **2** which has sent the wireless signal, and the time of providing alarm. The third display **3g** may be configured to display malfunction of the wireless sensor **2,** a decrease in a voltage of a battery, malfunction of the wireless relay **1,** and/or the like. For example, the third display **3g** may include a liquid crystal display or an organic EL (Electro Luminescence) display.

A third power supply unit **3h** may serve as a power supply for driving the receiver **3.** For example, the third power supply unit **3h** may be connected to an external commercial power source and be configured to supply appropriate power to the third control unit **3c** or the like.

As shown in **FIG. 5****,** the display device **4** includes: a fourth communication unit **4b** configured to receive wireless signals sent from the wireless relay **1** and the wireless sensor **2;** a fourth control unit **4c** configured to control operations of the fourth communication unit **4b** and the like; and the fourth storage unit **4d.** The display device **4** includes the display unit **4g** for displaying the information of the reception intensities of the wireless sensors **2** and the individual identification information thereof obtained from the wireless signals sent from the wireless relay 1 and the wireless sensor **2.** It is preferable that the display device **4** include a fourth manual-operation unit **4f** configured to perform various types of settings of the display device **4.** It is preferable that the display device **4** include a fourth power supply unit **4h** and a fourth antenna **4k** connected to the fourth communication unit **4b.**

As shown in **FIG. 1****,** the display device **4** may include a housing **4m** in a shape of a flat cuboid. For example, the display device **4** may be situated on an appropriate place in a house (e.g., a wall of a living room) which is easily seen by a user. The display unit **4g** is a liquid crystal display with a touch sensor function and is provided on a front surface of the housing **4m.** The touch switch of the liquid crystal display may serve as the fourth manual-operation unit **4f.** Further, a start switch **4f1** for starting the operation of the display device **4** is provided on the front surface of the housing **4m** to be positioned beside the display unit **4g.** Further, a stop switch **4f2** for forcibly terminating display on the display unit **4g** is provided on the front surface of the housing 4m. Note that, in the display device **4,** change of setting items, switch of contents displayed on the display unit **4g,** and the like can be done by use of the touch sensor of the liquid crystal display.

The display device **4** includes the fourth antenna **4k** situated on the side surface of the housing **4m.** The fourth antenna **4k** is electrically connected to the fourth communication unit **4b.** The fourth antenna **4k** of the display device 4 is configured to be rotatable along the side surface of the housing **4m.** Thus, the fourth antenna **4k** can be rotated to extend outside from the side surface of the housing **4m,** or be rotated to rest on the side surface. Note that, the display device **4** includes the fourth power supply unit **4h** constituted by a battery. The display device **4** may be configured to be driven by power supplied from the fourth power supply unit **4h** which is a built-in battery, or may be configured to be driven by power supplied from an external device.

The fourth communication unit **4b** is configured to receive wireless signals sent from the wireless relay 1 and the wireless sensor **2.** The fourth communication unit **4b** may be configured to be allowed to select a channel same as a channel used by the wireless relay **1** and the wireless sensor **2.** In other words, as with the wireless relay **1,** the fourth communication unit **4b** is configured to receive the response signal **10ab.** Further, as with the wireless sensor **2,** the fourth communication unit **4b** is configured to receive the check signal (especially, the second wireless signal **10ac**).

The fourth control unit **4c** is configured to control the fourth communication unit **4b** and the display unit **4g,** for example. The fourth control unit **4c** may include a built-in comparator configured to compare the individual identification information from the wireless sensor **2** with the individual identification information stored in the fourth storage unit **4d.** Further, it is preferable that the fourth control unit 4c include a clock function unit for allowing the fourth control unit **4c** to monitor the current time if needed. The fourth control unit **4c** may be configured to control the liquid crystal display of the display unit **4g** and turn on and off light emitting diodes constituting a backlight. The fourth control unit **4c** may include a microcomputer or the like. The fourth control unit **4c** is not limited to being constituted by a microcomputer, but may be constituted by a logic circuit.

The fourth control unit **4c** has a first function (sensor side reception intensity displaying function) of receiving the response signals **10ab** from the multiple wireless sensors **2** and displaying the reception intensities of the check signals of the multiple wireless sensors **2.** For example, the fourth control unit **4c** is configured to display the reception intensity of the check signal and the individual identification information of the wireless sensor **2** included in the received response signal **10ab,** on the display unit **4g** under a condition that the reception intensity of the check signal and the individual identification information are associated with each other. Additionally, the fourth control unit **4c** has a second function (relay side reception intensity displaying function) of receiving the second wireless signal **10ac** from the wireless relay **1** and displaying the reception intensities of the response signals **10ab** of the multiple wireless sensors **2.** For example, the fourth control unit **4c** is configured to display the reception intensity of the response signal **10ab** and the individual identification information of the wireless sensor **2** included in the received second wireless signal **10ac,** on the display unit **4g** under a condition that the reception intensity of the response signal **10ab** and the individual identification information are associated with each other. Note that, the fourth control unit **4c** may have at least one of the sensor side reception intensity displaying function and the relay side reception intensity displaying function.

The fourth storage unit **4d** is configured to store the information indicative of the reception intensity and the individual identification information of each wireless sensor **2** obtained from received wireless information. The fourth storage unit **4d** may store programs for driving the fourth control unit **4c.** The fourth storage unit **4d** may include an EEPROM or the like, for example.

The fourth manual-operation unit **4f** may be situated in front of the front surface of the liquid crystal display device. The fourth manual-operation unit **4f** may be constituted by a pressure sensitive resistance touch switch. The pressure sensitive resistance touch switch includes multiple contacts constituted by transparent electrodes on a transparent sheet member, and is configured to, when the sheet member is touched with a finger, indicate which part of the sheet member is touched. Note that, the fourth manual-operation unit **4f** is not limited to the liquid crystal display with a touch sensor function, but may be constituted by push buttons. The fourth manual-operation unit **4f** may include the touch switch, the start switch **4f1** and the stop switch **4f2.**

The display unit **4g** is configured to display contents of the wireless information sent from the wireless relay **1** and the wireless sensor **2.** For example, the display unit **4g** may be constituted by a display such as a liquid crystal display and an organic EL display. The display unit **4g** may be constituted by a liquid crystal display with a touch sensor function. In detail, the display unit **4g** may have both a displaying function of displaying the information indicative of the reception intensity and the individual identification information of each of the wireless sensors **2** and the like, and a manual-operation function of the fourth manual-operation unit **4f** for selecting contents displayed on the display unit **4g** and performing various types of settings. For example, the display unit **4g** may include a light guiding member with a rectangular flat shape, a reflective layer on a back side of the light guiding member, and a liquid crystal device on a front side of the light guiding member. The light guiding member may be configured to function as a back light together with light emitting diodes situated on one side of the light guiding member. The display device may be matrix type display including multiple pixels arranged in a matrix manner in horizontal and vertical directions, and may display letters and figures based on combinations of the pixels. For example, the display unit **4g** may be configured to display the individual identification information of the wireless sensor **2,** the reception intensity of the wireless signal, and the reception time of the wireless signal. For example, the display unit **4g** may display the reception intensities of the wireless signals of the wireless sensors **2** as numerical values, or as levels such as "strong", "middle", and "weak". Further, the display unit **4g** may display the reception intensities of the wireless signals by a level meter.

The fourth power supply unit **4h** serves as a power source for driving the display device **4.** The fourth power supply unit **4h** may be a primary battery or a secondary battery. The fourth power supply unit **4h** may be a lithium battery, for example. The fourth power supply unit **4h** is not limited to using a battery as a power source for driving the display device **4** but may use a commercial AC power source.

Next, a basic operation of the wireless system **10** of the present embodiment is described.

In the wireless system **10,** the multiple wireless sensors **2** and the wireless relay **1** communicate with each other to cooperate to provide alarm. In the wireless system **10,** for example, the wireless sensor **2** activates the sensing unit **2a** at a predetermined interval (e.g., 5 seconds), and compares a value measured by the sensing unit **2a** with a predetermined threshold, and outputs alarm when determining that a fire has occurred. When sensing a fire by the sensing unit **2a,** the wireless sensor **2** sends the wireless signal to the wireless relay **1.** When receiving the wireless signal, the wireless relay **1** may send the sensing information of the wireless sensor **2** as the wireless signal in order to cooperate with other wireless sensors **2** to provide alarm. Further, in a case where the wireless sensors **2** cooperate to provide alarm, when the second manual-operation unit **2f** of the wireless sensor **2** is manually operated in order to stop the alarm, the wireless system **10** stops providing of the alarm from the wireless sensors **2.** The wireless sensor **2** whose second manual-operation unit **2f** is manually operated may send the wireless signal for stopping the alarm to other wireless sensors **2** to stop providing of the alarm of the other wireless sensors **2.**

With regard to the wireless system **10,** to allow the wireless relay **1** to receive the wireless signals from the wireless sensors **2** at appropriate reception intensities, it is necessary to check electric wave conditions between the wireless relay **1** and the wireless sensors **2** and install the wireless sensors **2** on appropriate sites.

Hereinafter, in the wireless system **10** of the present embodiment, a checking operation in which the wireless relay **1** checks whether to receive wireless signals from the wireless sensors **2** at appropriate reception intensities is described with reference to **FIG. 6****.** Note that, in **FIG. 6****,** the four wireless sensors **2** in **FIG. 1** are shown as the wireless sensor **21** to **24** from left to right.

In initial setting of the wireless system **10,** a user uses the first manual-operation unit **1f** and the second manual-operation unit **2f** to set the same channel to the wireless relay **1** and the wireless sensors **2.** Further, in the wireless system **10,** a user uses the first manual-operation unit **1f** and the second manual-operation units **2f to** register pieces of the individual identification information of the wireless sensors **2** belonging to the same system on the wireless relay **1** and register the individual identification information of the wireless relay **1** on the wireless sensors **2.** The individual identification information can be registered by operating the first manual-operation unit **1f** of the wireless relay **1** or the second manual-operation unit **2f** of the wireless sensor **2.** With regard to the individual identification information, unique numbers may be individually allocated to the wireless sensors **2** in production procedure.

First, by manually operating the first manual-operation unit **1f** of the wireless relay **1,** the wireless system **10** is switched to a reception intensity checking mode of checking the reception intensities of the wireless sensors **2.** With regard to the wireless system **10,** in the reception intensity checking mode, the first control unit **1c** of the wireless relay **1** controls the first communication unit **1b** to output at a predetermined output level the first wireless signal **10aa** serving as the check signal. In other words, the wireless relay **1** sends the first wireless signal **10aa** to the multiple wireless sensors **2** (the preliminarily registered wireless sensors **21** to **24**) simultaneously.

The wireless sensor **2** tentatively stores the reception intensity of the received first wireless signal **10aa** measured by the second reception intensity detector **2bb,** in the second storage unit **2d.** The wireless sensor **2** creates the response signal **10ab** including the information indicative of the reception intensity of the first wireless signal **10aa** which is the received check signal, and its own individual identification information. Further, after receiving the first wireless signal **10aa,** the wireless sensor **2** sends the response signal **10ab** to the wireless relay **1.** Each of the multiple wireless sensors **2** sends the response signal **10ab** including the information indicative of the reception intensity of the received first wireless signal **10aa** and its own individual identification information, to the wireless relay **1** (see the step **S1** in **FIG. 6**). As described above, when receiving the check signal (the first wireless signal **10aa**), each of the multiple wireless sensors **2** sends the response signal **10ab** including the information indicative of the reception intensity of the received check signal (the first wireless signal **10aa**) and the individual identification information thereof, to the wireless relay **1.** In a step **S1** of **FIG. 6****,** the wireless sensors **2** send the response signals **10ab** at different timings T. However, the wireless sensors **2** may send the response signals **10ab** simultaneously.

Note that, the wireless sensor **2** receives the first wireless signal **10aa** from the wireless relay **1,** and compares the reception intensity of the received first wireless signal **10aa** with the predetermined threshold. The wireless sensor **2** may be configured to, when the reception intensity is larger than the predetermined threshold, send the response signal **10ab** to the wireless relay **1.** The wireless sensor **2** may be configured to, when the reception intensity is equal to or smaller than the predetermined threshold, deem the first wireless signal **10aa** invalid and not return the response signal **10ab.**

In the reception intensity checking mode, when the wireless relay **1** receives the response signal **10ab,** the first reception intensity detector **1bb** stores the reception intensity of the response signal **10ab.** Note that, the wireless relay **1** may determine that a wireless sensor **2** whose response signal **10ab** is not received by the wireless relay **1** within a predetermined period, of the multiple wireless sensors **2** is under a poor electric wave condition. The wireless relay **1** tentatively stores the information indicative of the reception intensities of the response signals **10ab** from the wireless sensors **2,** and pieces of the individual identification information of the wireless sensors **2** as the senders of the response signals **10ab,** in the first storage unit **1d**. Further, the wireless relay **1** creates the second wireless signal **10ac** from the information indicative of the reception intensities of the wireless sensors **2** as the senders stored in the first storage unit **1d** and pieces of the individual identification information of the wireless sensors **2** as the senders. The second wireless signal **10ac** includes the information indicative of the reception intensities of all of the wireless sensors **2** and pieces of the individual identification information of the wireless sensors **2** as the senders. The wireless relay **1** sends the created second wireless signal **10ac** to the preliminarily registered wireless sensors **2** simultaneously through the first communication unit **1b.** As described above, when receiving the response signals **10ab** from the multiple wireless sensors **2,** the wireless relay **1** sends the second wireless signal **10ac** including the information indicative of the reception intensities of the response signals **10ab** from the multiple wireless sensors **2** and pieces of the individual identification information of the multiple wireless sensors **2,** as the check signal, to the multiple wireless sensors **2,** simultaneously.

The wireless sensor **2** tentatively stores the reception intensity of the received second wireless signal **10ac** measured by the second reception intensity detector **2bb,** in the second storage unit **2d.** As with the case of the first wireless signal **10aa,** after receiving the second wireless signal **10ac,** the wireless sensor **2** sends the response signal **10ab** to the wireless relay 1. Each of the multiple wireless sensors 2 sends the response signal **10ab** including the information indicative of the reception intensity of the received second wireless signal **10ac** and its own individual identification information, to the wireless relay **1** (see the step **S2 in** **FIG. 6**). As described above, when receiving the check signal (the second wireless signal **10ac**), each of the multiple wireless sensors **2** sends the response signal **10ab** including the information indicative of the reception intensity of the received check signal (the second wireless signal **10ac**) and the individual identification information thereof, to the wireless relay **1.**

Further, the display device **4** receives the response signals **10ab** from the multiple wireless sensors **2** and displays the reception intensities of the check signals of the multiple wireless sensors **2.** Additionally, the display device **4** receives the second wireless signal **10ac** from the wireless relay **1** and displays the reception intensities of the response signals **10ab** of the multiple wireless sensors **2.**

Until the reception intensity checking mode is interrupted by manually operating the first manual-operation unit **1f** of the wireless relay **1,** the wireless system **10** repeats the step **S2.** For example, the wireless relay **1** may send the second wireless signal **10ac** at an interval of 3 seconds. **In** this case, a user can easily know the reception intensity with regard to the wireless sensor **2** whose installation site has been changed, anytime. Note that, the wireless system **10** of the present embodiment repeats the step **S2** but may repeat the steps **S1** and **S2.**

The wireless sensor **2** may be configured to, when the reception intensity of the first wireless signal **10aa** or the second wireless signal **10ac** exceeds a predetermined level, provide sounds from the second announcement unit **2e** and turn on the light emitter **2n** to announce that the reception condition is fine. For example, the wireless sensor **2** may be configured to turn on the LED (Light Emitting Diode) of the light emitter **2n** three times, in order to announce that the electric wave condition regarding the wireless relay **1** is good. Further, for example, the wireless sensor **2** may be configured to repeat three times an operation of blinking twice the LED (Light Emitting Diode) of the light emitter **2n,** in order to announce that the wireless communication with the wireless relay **1** is available but the electric wave condition regarding the wireless relay **1** is not so good. Additionally, for example, the wireless sensor **2** may be configured to rapidly blink the LED (Light Emitting Diode) of the light emitter **2n** ten times, in order to announce that the wireless communication with the wireless relay **1** is unavailable.

Further, the display device **4** may receive the second wireless signal **10ac** of the wireless relay **1** or the response signal **10ab** of the wireless sensor **2,** and, when the reception intensity of the second wireless signal **10ac** or the response signal **10ab** is appropriate, output a voice message indicating "the reception intensity is appropriate". Additionally, the display device **4** may indicate whether the reception intensity is appropriate, by blinking the indication lamp predetermined times. The wireless relay **1** may be configured to provide alarm in the aforementioned manner.

In the wireless system **10** of the present embodiment, each wireless sensor **2** displays the reception intensity, and the display device **4** displays the reception intensities at the wireless relay **1** and the reception intensities at the multiple wireless sensors **2** simultaneously. Therefore, in the wireless system **10** of the present embodiment, it is possible to install the wireless sensor **2** at any time while checking the reception intensity at the installation site of the wireless sensor **2.** Therefore, according to the wireless system **10** of the present embodiment, it is possible to easily change the installation site of the wireless sensor **2** to a site showing the higher reception intensity. Note that, the wireless system **10** may include an additional sensor such as a fire sensor which does not perform wireless communication with but is connected via wires to the wireless relay **1,** the receiver **3,** and/or the transmission line **10c**.

As apparent from the above embodiment, the wireless system (**10**) of the first aspect in accordance with the present invention includes: multiple wireless sensors (**2**); a wireless relay (**1**) configured to perform wireless communication with the multiple wireless sensors (**2**) to send sensing information of one or more of the multiple wireless sensors (**2**) to a receiver (**3**); and a display device (**4**) configured to receive wireless signals on the wireless communication between the wireless relay (**1**) and the multiple wireless sensors (**2**) and display received intensities of wireless signals relating to one or more of the multiple wireless sensors (**2**). The wireless relay (**1**) includes a first communication unit (**1b**) configured to send a first wireless signal (**10aa**) to preliminarily registered wireless sensors (**2**) simultaneously. Each of the multiple wireless sensors (**2**) includes a second communication unit (**2b**) configured to send a response signal (**10ab**) including information indicative of a reception intensity of the received first wireless signal (**10aa**) and individual identification information of the corresponding wireless sensor (**2**), to the wireless relay (**1**). The wireless relay (**1**) is configured to, when receiving the response signals (**10ab**), send a second wireless signal (**10ac**) including information indicative of reception intensities of the response signals (**10ab**) from the individual wireless sensors (**2**) and individual identification information of the individual wireless sensors (**2**). The first communication unit (**1b**) is configured to, when the wireless relay (**1**) receives the response signals (**10ab**), send a second wireless signal (**10ac**) including information indicative of reception intensities of the response signals (**10ab**) from the individual wireless sensors (**2**) and individual identification information of the individual wireless sensors (**2**), to the preliminarily registered wireless sensors (**2**) simultaneously. The wireless relay (**1**) and each of multiple wireless sensors (**2**) are configured to repeat sending the second wireless signal (**10ac**) and the response signal (**10ab**), respectively. The display device (**4**) is configured to receive the response signal (**10ab**) and the second wireless signal (**10ac**) and display the reception intensities of the individual wireless sensors (**2**) on a display unit (**4g**).

In other words, the wireless system (**10**) of the first aspect in accordance with the present invention includes: multiple wireless sensors (**2**); a wireless relay (**1**) configured to perform wireless communication with the multiple wireless sensors (**2**) to send sensing information of one or more of the multiple wireless sensors (**2**) to a receiver (**3**); and a display device (**4**). The wireless relay (**1**) is configured to send a first wireless signal (**10aa**) as a check signal. Each of the multiple wireless sensors (**2**) is configured to, when receiving the check signal, send a response signal (**10ab**) including information indicative of a reception intensity (first reception intensity) of the received check signal and individual identification information thereof. The wireless relay (**1**) is configured to, when receiving the response signals (**10ab**) from the multiple wireless sensors (**2**), send, as the check signal, a second wireless signal (**10ac**) including information indicative of reception intensities (second reception intensities) of the response signals (**10ac**) of the multiple wireless sensors (**2**) and pieces of the individual identification information of the multiple wireless sensors (**2**). The display device (**4**) has at least one of: a first function of receiving the response signals (**10ab**) from the multiple wireless sensors (**2**) and displaying the reception intensities (first reception intensities) of the received check signals of the multiple wireless sensors (**2**); and a second function of receiving the second wireless signal (**10ac**) from the wireless relay (**1**) and displaying the reception intensities (second reception intensities) of the response signals (**10ab**) of the multiple wireless sensors (**2**).

In the wireless system (**10**) of the second aspect in accordance with the present invention which is realized in combination with the first aspect, the display device (**4**) is configured to, in the first function, display the reception intensity of the check signal of the wireless sensor (**2**) and the individual identification information included in the received response signal (**10ab**) in association with each other.

In the wireless system (**10**) of the third aspect in accordance with the present invention which is realized in combination with the first or second aspect, the display device (**4**) is configured to, in the second function, display the reception intensities of the response signals (**10ab**) and pieces of the individual identification information of the wireless sensors (**2**) included in the received second wireless signal (**10ac**) in association with each other.

In the wireless system (**10**) of the fourth aspect in accordance with the present invention which is realized in combination with any one of the first to third aspects, each of the multiple wireless sensors (**2**) is configured to, when receiving the check signal from the wireless relay (**1**), compare the reception intensity of the check signal with a predetermined threshold. Each of the multiple wireless sensors (**2**) is configured to, when the reception intensity of the check signal is larger than the predetermined threshold, send the response signal (**10ab**) to the wireless relay (**1**). Each of the multiple wireless sensors (**2**) is configured to, when the reception intensity of the check signal is equal to or smaller than the predetermined threshold, not send the response signal (**10ab**).

In the wireless system (**10**) of the fifth aspect in accordance with the present invention which is realized in combination with any one of the first to fourth aspects, the wireless relay (**1**) is configured to determine that a wireless sensor (**2**) whose response signal (**10ab**) is not received by the wireless relay (**1**) within a predetermined period is under a poor electric wave condition.

As described above, in the wireless system of the present invention, the display device (**4**) receives the wireless signal including the information indicative of the reception intensities and pieces of the individual identification information of the individual wireless sensors (**2**) and displays the reception intensities of the wireless sensors (**2**), and therefore a user is allowed to check the reception intensities of the wireless sensors (**2**) collectively.

## Claims

1. A wireless system (**10**), comprising:
multiple wireless sensors (**2**);
a wireless relay (**1**) configured to perform wireless communication with the multiple wireless sensors (**2**) to send sensing information of one or more of the multiple wireless sensors (**2**) to a receiver (**3**); and
a display device (**4**),
the wireless relay (**1**) being configured to send a first wireless signal (**10aa**) as a check signal,
each of the multiple wireless sensors (**2**) being configured, when receiving the check signal, to send a response signal (**10ab**) including information indicative of a reception intensity of the received check signal and individual identification information thereof,
the wireless relay (**1**) being configured to, when receiving the response signals (**10ab**) from the multiple wireless sensors (**2**), send, as a check signal, a second wireless signal (**10ac**) including information indicative of reception intensities of the response signals (**10ab**) of the multiple wireless sensors (**2**) and pieces of the individual identification information of the multiple wireless sensors (**2**), and
the display device (**4**) having at least one of:
a first function of receiving the response signals (**10ab**) from the multiple wireless sensors (**2**) and displaying the reception intensities of the received check signals of the multiple wireless sensors (**2**); and
a second function of receiving the second wireless signal (**10ac**) from the wireless relay (**1**) and displaying the reception intensities of the response signals (**10ab**) of the multiple wireless sensors (**2**).

## Patentansprüche

1. Drahtloses System (**10**), umfassend:
mehrere Drahtlossensoren (**2**);
ein Drahtlosrelais (**1**), konfiguriert zum Durchführen von drahtloser Kommunikation mit den mehreren Drahtlossensoren (**2**) zum Senden von Sensorinformationen eines oder mehrerer der mehreren Drahtlossensoren (**2**) an einen Empfänger (**3**); und
eine Anzeigevorrichtung (**4**),
wobei das Drahtlosrelais (**1**) konfiguriert ist, ein erstes Drahtlossignal (**10aa**) als ein Prüfsignal zu senden,
jeder der mehreren Drahtlossensoren (**2**) konfiguriert ist, bei Empfang des Prüfsignals ein Antwortsignal (**10ab**) zu senden, einschließlich Informationen, die auf eine Empfangsintensität des erhaltenen Prüfsignals und einzelne Identifikationsinformationen davon hinweisen,
wobei das Drahtlosrelais (**1**) konfiguriert ist, bei Empfang der Antwortsignale (**10ab**) von den mehreren Drahtlossensoren (**2**), als ein Prüfsignal ein zweites Drahtlossignal (**10ac**) zu senden, das Informationen enthält, die Empfangsintensitäten der Antwortsignale (**10ab**) der mehreren Drahtlossensoren (**2**) und Stücke der einzelnen Identifizierungsinformationen der mehreren Drahtlossensoren (**2**) anzeigen, und
wobei die Anzeigevorrichtung (**4**) mindestens eines der folgenden aufweist:
eine erste Funktion zum Empfang der Antwortsignale (**10ab**) von den mehreren Drahtlossensoren (**2**) und Anzeige der Empfangsintensitäten der empfangenen Prüfsignale der mehreren Drahtlossensoren (**2**); und
eine zweite Funktion zum Empfang des zweiten Drahtlossignals (**10ac**) von dem Drahtlosrelais (**1**) und Anzeige der Empfangsintensitäten der Antwortsignale (**10ab**) der mehreren Drahtlossensoren (**2**).

## Revendications

1. Système sans fil (10), comprenant :
de multiples capteurs sans fil (2) ;
un relais sans fil (1) configuré de manière à mettre en oeuvre une communication sans fil avec les multiples capteurs sans fil (2) en vue d'envoyer des informations de détection d'un ou de plusieurs des multiples capteurs sans fil (2) à un récepteur (3) ; et
un dispositif d'affichage (4) ;
le relais sans fil (1) étant configuré de manière à envoyer un premier signal sans fil (10aa) sous la forme d'un signal de contrôle ;
chacun des multiples capteurs sans fil (2) étant configuré, lors de la réception du signal de contrôle, de manière à envoyer un signal de réponse (10ab) qui inclut des informations indicatives d'une intensité de réception du signal de contrôle reçu et des informations d'identification individuelle connexes ;
le relais sans fil (1) étant configuré de manière à, lors de la réception des signaux de réponse (lOab) en provenance des multiples capteurs sans fil (2), envoyer, sous la forme d'un signal de contrôle, un second signal sans fil (10ac) incluant des informations indicatives d'intensités de réception des signaux de réponse (10ab) des multiples capteurs sans fil (2) et des éléments des informations d'identification individuelle des multiples capteurs sans fil (2) ; et
le dispositif d'affichage (4) présentant au moins l'une parmi :
une première fonction consistant à recevoir les signaux de réponse (10ab) en provenance des multiples capteurs sans fil (2) et à afficher les intensités de réception des signaux de contrôle reçus en provenance des multiples capteurs sans fil (2) ; et
une seconde fonction consistant à recevoir le second signal sans fil (10ac) en provenance du relais sans fil (1) et à afficher les intensités de réception des signaux de réponse (10ab) des multiples capteurs sans fil (2).
